# EUROPEAN PATENT APPLICATION

(11) **EP 4 607 688 A1**
(43) Date of publication of application: **27.08.2025**
(21) Application number: 24842348.5
(22) Date of filing: 15.07.2024
(51) Int. Cl.: H01M 50/553

(54) **TERMINAL POST, TOP COVER STRUCTURE, BATTERY CELL, BATTERY MODULE, AND BATTERY PACK**

(30) Priority: 20.07.2023 CN 202321912361 U
(71) Applicant: Eve Power Co., Ltd., Jingmen, Hubei 448000 (CN)
(72) Inventor: ZHENG, Xu, Jingmen, Hubei 448000 (CN); SHU, Kuanjin, Jingmen, Hubei 448000 (CN); HE, Xiaowu, Jingmen, Hubei 448000 (CN); AN, Suli, Jingmen, Hubei 448000 (CN); WANG, Junmin, Jingmen, Hubei 448000 (CN); HE, Wei, Jingmen, Hubei 448000 (CN)
(74) Representative: Berggren Oy
(86) International application number: PCT/CN2024/105464
(87) International publication number: WO 2025/016357

(57) **Abstract**

The present application relates to the technical field of batteries, and a terminal, a top cover structure, a battery cell, a battery module, and a battery pack are disclosed. The terminal includes a first metal part and a second metal part connected to each other. a protruding portion is arranged at one of the first metal part and the second metal part, a first recessed portion is arranged at another one, the protruding portion is connected to the first recessed portion in an embedded manner; and an edge of one end of the second metal part extends outward to form an extension edge, a second recessed portion is arranged at the first metal part, the extension edge is embedded in the second recessed portion.

## Description

The present Application claims the priority to Chinese Application No. 202321912361.4, filed on July 20, 2023, the content of which is incorporated herein by reference in its entirety.

### TECHNICAL FIELD

The present application relates to the technical field of batteries, and in particular to terminals, top cover structures, battery cells, battery modules, and battery packs.

### BACKGROUND

In a power battery, a terminal is a component connecting inside and outside of the battery. One end of the terminal is connected to the outside of the battery, and another end is connected to an internal cell pack of the battery, so that charging and discharging are achieved. A negative electrode of the battery is usually made of two materials.

In related art, friction welding is usually used to fixedly connect two metal parts of different materials.

### SUMMARY

Firstly, linear expansion coefficient varies among different metal materials, friction welding is easy to cause thermal stress, the thermal stress is often difficult to relieve and would result in significant welding deformation. Secondly, during welding, with an increase of welding stress and brittleness, a welding surface is prone to cracking, especially in a heat affected zone, the welding surface is more prone to cracking and even fracture, which reduces the safety of a terminal.

Therefore, it is urgent to provide a terminal, a top cover structure, a battery cell, a battery module, and a battery pack to solve the above problems.

The present application provides a terminal which can improve a bonding strength between a first metal part and a second metal part, reduce the risk of fracture, and improve the reliability of the terminal.

In a first aspect, the present application provides a terminal, including a first metal part and a second metal part connected to each other. A protruding portion is arranged at an end of one of the first metal part and the second metal part, and a first recessed portion is arranged at an end of another one of the first metal part and the second metal part. The protruding portion is connected to the first recessed portion in an embedded manner. An edge of an end, close to the first metal part, of the second metal part extends outward to form an extension edge. The extension edge is disposed around the second metal part. A second recessed portion is arranged at the first metal part. The extension edge is connected to the second recessed portion in an embedded manner.

The present application further provides a top cover structure, including the terminal described above, and further including: a cover plate assembly and a pressing block. A mounting hole is formed in the pressing block, and the second metal part passes through the cover plate assembly and closely fits the mounting hole. The first metal part and the pressing block are respectively abutted against two sides of the cover plate assembly. A welding groove is formed in a surface of the pressing block, and the welding groove is in communication with a periphery of the mounting hole. The second metal part is fixed to the pressing block by welding, and the welding groove is configured to accommodate a welding residue.

In a second aspect, the present application further provides a battery cell, including a casing, a cell pack, and the top cover structure described above. The cell pack is disposed in the casing, and the top cover structure is connected to an opening end of the casing in a sealed manner.

In a third aspect, the present application further provides a battery module, including the battery cell described above.

In a fourth aspect, the present application further provides a battery pack, including the battery module described above.

### BENEFICIAL EFFECTS

The terminal provided in the present application includes the first metal part and the second metal part. Through embedding the protruding portion into the first recessed portion, and embedding the extension edge into the second recessed portion, a bonding surface is formed to connect the first metal part to the second metal part. An arrangement of the extension edge increases a radial length of the bonding surface, so that a bonding strength between the first metal part and the second metal part is improved, the risk of fracture is reduced, and the reliability of the terminal is enhanced.

### BRIEF DESCRIPTION OF THE DRAWINGS

FIG. 1 is a schematic diagram of a structure of a terminal provided in an embodiment of the present application;
FIG. 2 is an axial cross-section view provided in an embodiment of the present application;
FIG. 3 is a schematic diagram of a structure of a top cover provided in an embodiment of the present application; and
FIG. 4 is an exploded view of a structure of a top cover provided in an embodiment of the present application.

### Reference numerals in the drawings:

100: terminal; 200: cover plate assembly; 300: pressing block; 310: mounting hole; 320: welding groove; 400: connecting piece; 410, stepped hole;
1: first metal part; 11: protruding portion; 12: second recessed portion; 13: first groove;
2: second metal part; 21: extension edge; 22: first recessed portion; 23: second groove.

### DETAILED DESCRIPTION

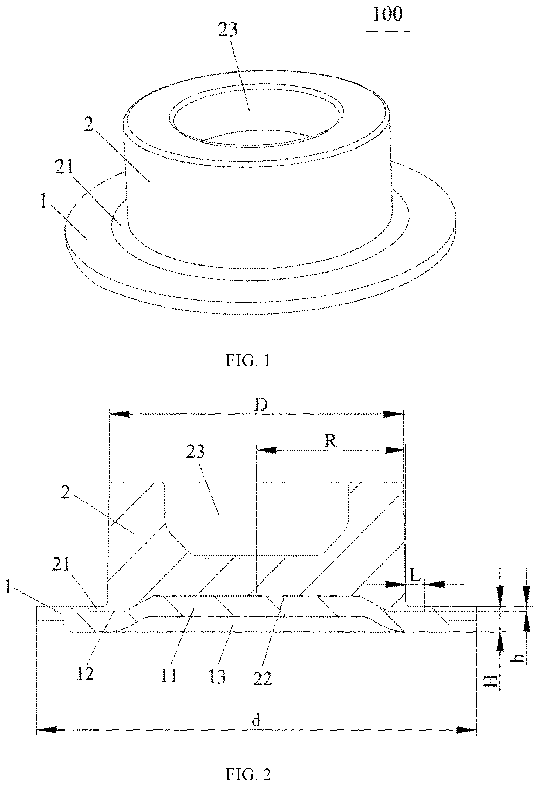

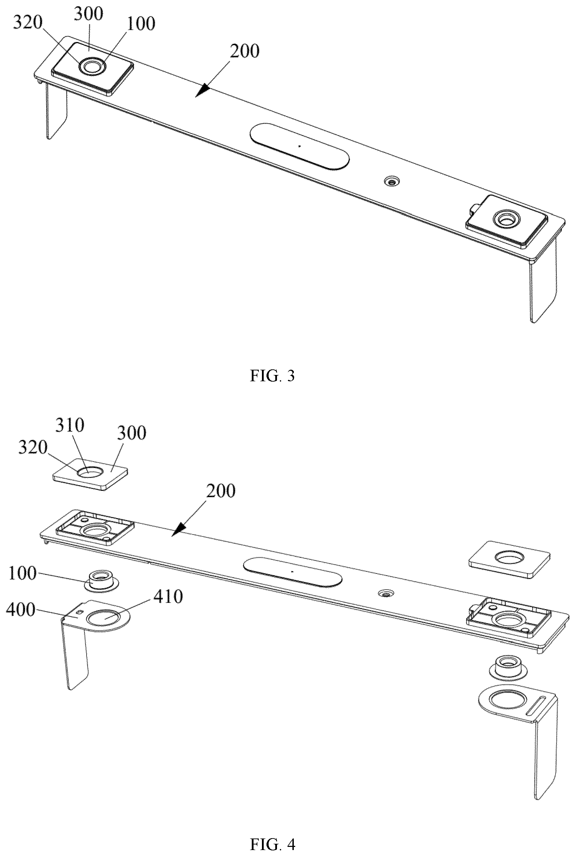

As shown in FIG. 1 and FIG. 2, this embodiment provides a terminal 100, which is applied to a top cover structure and located at a negative electrode of a battery. As shown in FIG. 3 and FIG. 4, the top cover structure includes a cover plate assembly 200, a pressing block 300, a connecting piece 400, and a terminal 100. The terminal 100 includes a first metal part 1 and the second metal part 2 connected to each other. A mounting hole 310 is formed in the pressing block 300, and the second metal part 2 passes through the cover plate assembly 200 and closely fits the mounting hole 310. The first metal part 1 and the pressing block 300 are respectively abutted against two sides of the cover plate assembly 200. An end, facing away from the first metal part 1, of the second metal part 2 is connected to an outside of the battery, an end, facing away from the second metal part 2, of the first metal part 1 is welded to the connecting piece 400, and the connecting piece 400 is connected to an internal cell pack of the battery, so that charging and discharging are achieved.

Particularly, as shown in FIG. 1 and FIG. 2, the terminal 100 is made of a composite plate by cold heading, or may be formed by cold heading of the first metal part 1 and the second metal part 2, which are separately arranged. A protruding portion 11 is arranged at a center of an end of one of the first metal part 1 and the second metal part 2, and a first recessed portion 22 is arranged at a center of an end of another one of the first metal part 1 and the second metal part 2. The protruding portion 11 is connected to the first recessed portion 22 in an embedded manner. In this embodiment, a protruding portion 11 is arranged at an end of the first metal part 1, and a first recessed portion 22 is arranged at an end of the second metal part 2. An edge, close to the first metal part 1, of the second metal part 2 extends outwards to form an extension edge 21. The extension edge 21 is disposed around the second metal part 2. A second recessed portion 12 is further arranged at the first metal part 1. The second recessed portion 12 is disposed around the protruding portion 11, and the extension edge 21 is embedded in the second recessed portion 12. In an embodiment, one of the first metal part 1 and the second metal part 2 is formed as a copper cylinder, and another one is formed as an aluminum cylinder. In this embodiment, the first metal part 1 is formed as a copper cylinder, and the second metal part 2 is formed as an aluminum cylinder.

The terminal 100 provided in this embodiment is made of a copper-aluminum composite plate by cold heading. Compared with an existing terminal 100 formed by friction welding, in the process of cold heading, welding and CNC machining procedures are eliminated, so that a production efficiency is increased, and a waste of materials is effectively reduced, and a production cost is well controlled. Through embedding the protruding portion 11 into the first recessed portion 12, and embedding the extension edge 21 into the second recessed portion 12, the first metal part 1 closely fits the second metal part 2, so as to form a bonding surface to connect the first metal part 1 to the second metal part 2. Through an arrangement of the extension edge 21, a radial length of the bonding surface is increased, so that a bonding strength between the first metal part 1 and the second metal part 2 is increased, the risk of fracture is reduced, the reliability of the terminal 100 is enhanced.

In this embodiment, combined with FIG. 1 and FIG. 2, the first metal part 1 and the second metal part 2 are both in a structure of cylinder, and an outer diameter of the first metal part 1 is larger than an outer diameter of the second metal part 2, so that after the second metal part 2 passes through the cover plate assembly 200, the first metal part 1 can be abutted against a lower surface of the cover plate assembly 200 to play a role in limiting. The protruding portion 11 and the second recessed portion 12 are both disposed around a circumferential direction of the first metal part 1, and the protruding portion 11 is formed by a material flowing of the first metal part 1 during pier pressing. The first recessed portion 22 and the extension edge 21 are both disposed around a circumferential direction of the second metal part 2, and the extension edge 21 is formed by a material spreading and flowing of the second metal part 2 during pier pressing.

After the second metal part 2 passes through the cover plate assembly 200 and closely fits the mounting hole 310, the second metal part 2 is fixed to the pressing block 300 by laser welding. As shown in FIG. 3 and FIG. 4, a welding groove 320 is formed in a surface of the pressing block 300, and the welding groove 320 is in communication with a peripheral side of the mounting hole 310. The second metal part 2 is fixed to the pressing block 300 by welding, and the welding groove 320 is configured to accommodate a welding residue. Particularly, an upper surface of the pressing block 300 is arranged higher than an upper surface of the second metal part 2. The welding groove 320 is in a shape of circle, and the mounting hole 310 is formed at a bottom part of the welding groove 320 and is arranged coaxially with the mounting hole 310. A radial diameter of the welding groove 320 is larger than a radial diameter of the mounting hole 310, so that a stepped structure is formed at a top of the pressing block 300. It is understandable that when welding the pressing block 300 with the second metal part 2, welding will be performed at the top of the pressing block 300 along a bonding portion between the terminal 100 and the pressing block 300, so an aluminum material at a top of the second metal part 2 would be extruded during welding to form a welding residue. The welding groove 320 is configured to accommodate the welding residue extruded during welding, so that the welding residue is prevented from protruding from upper surfaces of the press block 300 and the second metal part 2, thus flatness and aesthetics of the appearance of the top cover structure are ensured. In other embodiments, the welding groove 320 may be in a shape of square, oval or other special shapes, as long as a size of an outer edge of the welding groove 320 can be ensured to be larger than a size of an outer edge of the mounting hole 310, which are not specifically limited here.

In addition, as shown in FIG. 2 and FIG. 4, an edge structure of the first metal part 1 is configured as a stepped structure, and a stepped hole 410 is formed in the connecting piece 400. The stepped structure is configured to closely fit the stepped hole 410, and a step surface of the first metal part 1 is abutted against a step surface of the stepped hole 410. As such, a positioning effect between the first metal part 1 and the connecting piece 400 can be enhanced. After assembly, a mutual movement between the first metal part 1 and the connecting piece 400 can be restricted to facilitate subsequent assembly and welding processes. Furthermore, through the fit between step surfaces, a gap between a part with a smaller outer diameter of the first metal part 1 and a hole wall of the stepped hole 410 can be covered, so that heat generated in welding is avoided from being transmitted to a vicinity of the cover plate assembly 200 through the gap.

In addition, as shown in FIG. 2, an outer side wall of the second metal part 2 is inclined relative to an axis of the second metal part, and a hole wall of the mounting hole 310 is the same as the outer side wall of the second metal part 2 in an inclination direction and an inclination angle, and the outer side wall of the second metal part 2 closely fits the hole wall of the mounting hole 310. In an embodiment, an angle θ between the outer side wall of the second metal part 2 and the axis is greater than 0° and less than or equal to 3°, for example, the angle θ is equal to 1°, 2° or 3°. In this embodiment, the outer side wall of the second metal part 2 is inclined from bottom to top towards its axis direction. In other embodiments, the outer side wall of the second metal part 2 can be inclined from bottom to top towards a direction away from the axis. The hole wall of the mounting hole 310 can be set to be the same as the outer side wall of the second metal part 2 in the inclination direction and the inclination angle. That is, the outer side wall of the second metal part 2 is an inclined surface, and the hole wall of the mounting hole 310 is an inclined surface, so that the first metal part 1 closely fits the mounting hole 310 through inclined surfaces. On one hand, through the arrangement of the inclined surfaces, a lower plastic part of the cover plate assembly 200 is prevented from being burned by direct laser irradiation during laser welding. On another hand, the fitting surfaces between the second metal part 2 and the pressing block 300 can be interlocked through the inclined surfaces, thus improving a structural strength of the top cover structure.

In an embodiment, as shown in FIG. 2, a ratio D/d of a minimum diameter D of the second metal part 2 to a maximum diameter d of the first metal part 1 is greater than or equal to 0.5 and less than 1. It should be noted that when the outer side wall of the second metal part 2 is a vertical surface, the diameter of the second metal part 2 at each point along the axial direction is constant, which is equal to the minimum diameter D of the second metal part 2. When the outer side wall of the second metal part 2 is an inclined surface, the diameter of the second metal part 2 along the axial direction is varied, and a diameter at a thinnest position of the second metal part 2 is equal to the minimum diameter D of the second metal part 2. In this embodiment, the minimum diameter D of the second metal part 2 is equal to a diameter at a top of the second metal part 2. As shown in FIG. 2, the first metal part 1 is of a stepped structure, so the maximum diameter d of the first metal part 1 is equal to a diameter of a largest part of the first metal part 1. For example, D/d may be equal to 0.5, 0.6, 0.7, 0.8 or 0.9. By setting D/d in this range, a structural strength of the terminal 100 can be ensured, and an outer diameter of the first metal part 1 can be ensured to be larger than an outer diameter of the second metal part 2, so that after the second metal part 2 passes through the cover plate assembly 200, the first metal part 1 can be abutted against a lower surface of the cover plate assembly 200 to play a role in limiting.

In addition, referring to FIG. 2, a first groove 13 is formed by pier pressing at an end, facing away from the second metal part 2, of the first metal part 1. Particularly, while the first metal part 1 is formed by pier pressing with a cold heading die, the first groove 13 is formed by pier pressing, while the first groove 13 is formed by pier pressing, a first protruding portion 11 is formed on another side of the first metal part 1, and through the first protruding portion 11, a first recessed portion 22 is formed by pier pressing on the second metal part 2. In addition, when the first groove 13 is formed by pier pressing in a bottom of the first metal part 1, a part of material can be moved to both sides. Because of an equal volume deformation formed in pier pressing, a diameter of the first metal part 1 may be larger to meet dimensional requirements, and a dimension around the first groove 13 may be more sufficient to ensure a structural strength of the first metal part 1.

As shown in FIG. 2, optionally, a ratio L/R of a length L of the extension edge 21 along its radial direction to a maximum radius R of the second metal part 2 is greater than or equal to 0.1 and less than or equal to 0.5. Therefore, since the outer side wall of the second metal part 2 is an inclined surface, a radius at a thickest position of the second metal part 2 is equal to the maximum radius R of the second metal part 2. In this embodiment, the maximum radius R of the second metal part 2 is equal to a diameter of a bottom of the second metal part 2. For example, L/R may be equal to 0.1, 0.2, 0.3, 0.4 or 0.5. By setting L/R in this range, it can be ensured that a size of the extension edge 21 may increase a radial length of a bonding surface without exceeding a radial diameter of the first metal part 1, thereby a bonding strength between the first metal part 1 and the second metal part 2 is improved, the risk of fracture is reduced, and the reliability of the terminal 100 is enhanced.

In an embodiment, as shown in FIG. 2, a ratio h /H of a thickness h of the extension edge 21 to a maximum thickness H of the first metal part 1 is greater than or equal to 0.1 and less than or equal to 0.5. Since an axial dimension of the first metal part 1 is varied, in this embodiment, the maximum thickness of the first metal part 1 is equal to a thickness of the first metal part 1 close to the edge. For example, h/H may be equal to 0.1, 0.2, 0.3, 0.4 or 0.5. By setting h/H in this range, a depth of the extension edge 21 being embedded in the first recessed portion 22 can be ensured, thus the bonding strength between the first metal part 1 and the second metal part 2 is improved, the risk of fracture is reduced, and the reliability of the terminal 100 is enhanced.

It should be noted that during pier pressing, corrugated lines in circles are formed on a surface of an end, facing away from the second metal part 2, of the first metal part 1 along the radial direction. The corrugated lines are naturally formed due to a material flowing during cold heading, which can increase the structural strength of the first metal part 1, thereby increasing the structural strength of the terminal 100.

As shown in FIG. 2, a second groove 23 is formed by pier pressing in an end, facing away from the first metal part 1, of the second metal part 2. By forming the second groove 23 by pier pressing at a top of the second metal part 2, material originally located at the second groove 23 can be moved to other positions of the second metal part 2. Since a diameter of the second metal part 2 is constant during forming, a height of the second metal part 2 is increased, a material consumption is reduced, and a cost is reduced while meeting design size requirements.

The embodiments further provide a battery cell, including a casing, a cell pack and a top cover structure. The cell pack is disposed in the casing, and the top cover structure is connected to an opening end of the casing in a sealed manner. In addition, the casing is configured to carry the cell pack to provide effective restriction and protection for the cell pack. The casing may be made of conductive metal materials, such as aluminum, aluminum alloy, etc., and the battery top cover can be connected to the casing by welding in a sealed manner. **In** the battery cell provided in this embodiment, through the top cover structure provided in this embodiment, the safety of the battery cell can be improved, and the production cost of the cell pack can be reduced.

The embodiments further provide a battery module, including a battery cell. **In** the battery module provided in this embodiment, through the battery cell provided in this embodiment, the safety of the battery module can be improved, and the production cost of the battery module can be reduced.

The embodiments further provide a battery pack, including a battery module. In the battery pack provided in this embodiment, through the battery module provided in this embodiment, the safety of the battery pack can be improved, and the production cost of the battery pack can be reduced.

## Claims

1. A terminal, comprising a first metal part (1) and a second metal part (2) connected to each other, a protruding portion (11) being arranged at an end of one of the first metal part (1) and the second metal part (2), a first recessed portion (22) being arranged at an end of another one of the first metal part (1) and the second metal part (2), the protruding portion (11) being connected to the first recessed portion (22) in an embedded manner;
an edge of an end, close to the first metal part (1), of the second metal part (2) extending outward to form an extension edge (21), the extension edge (21) being disposed around the second metal part (2), a second recessed portion (12) being arranged at the first metal part (1), and the extension edge (21) being connected to the second recessed portion (12) in an embedded manner.

2. The terminal of claim 1, wherein the protruding portion (11) is disposed on an end of the first metal part (1), the second recessed portion (12) is disposed around the protruding portion (11), and the first recessed portion (22) is disposed on an end of the second metal part (2).

3. The terminal of claim 1, wherein a ratio L/R of a length L of the extension edge (21) along a radial direction of the extension edge to a maximum radius R of the second metal part (2) is greater than or equal to 0.1 and less than or equal to 0.5.

4. The terminal of claim 1, wherein a ratio h/H of a thickness h of the extension edge (21) to a maximum thickness H of the first metal part (1) is greater than or equal to 0.1 and less than or equal to 0.5.

5. The terminal of any one of claims 1 to 4, wherein one of the first metal part (1) and the second metal part (2) is formed as a copper cylinder, and another one of the first metal part (1) and the second metal part (2) is formed as an aluminum cylinder.

6. The terminal of any one of claims 1 to 5, wherein a ratio D/d of a minimum diameter D of the second metal part (2) to a maximum diameter d of the first metal part (1) is greater than or equal to 0.5 and less than 1.

7. The terminal of any one of claims 1 to 6, wherein corrugated lines are arranged at an end, facing away from the second metal part (2), of the first metal part (1).

8. The terminal of any one of claims 1 to 7, wherein a first groove (13) is formed in an end, facing away from the second metal part (2), of the first metal part (1).

9. The terminal of any one of claims 1 to 8, wherein a second groove (23) is formed in an end, facing away from the first metal part (1), of the second metal part (2).

10. The terminal of any one of claims 1 to 9, wherein the terminal (100) is formed by cold heading.

11. A top cover structure, comprising the terminal of any one of claims 1 to 10, further comprising:
a cover plate assembly (200); and
a pressing block (300), a mounting hole (310) being formed in the pressing block, the second metal part (2) passing through the cover plate assembly (200) and closely fitting the mounting hole (310), the first metal part (1) and the pressing block (300) are respectively abutted against two sides of the cover plate assembly (200);
a welding groove (320) being formed in a surface of the pressing block (300), the welding groove (320) being in communication with a periphery of the mounting hole (310), the second metal part (2) being fixed to the pressing block (300) by welding, the welding groove (320) being configured to accommodate a welding residue.

12. The top cover structure of claim 11, wherein an outer side wall of the second metal part (2) is inclined relative to an axis of the second metal part, and a hole wall of the mounting hole (310) is same as the outer side wall of the second metal part (2) in an inclination direction and an inclination angle, and the outer side wall of the second metal part (2) closely fits the hole wall of the mounting hole (310).

13. A battery cell, comprising a casing, a cell pack, and the top cover structure of any one of claims 11 to 12, the cell pack being disposed in the casing, the top cover structure being connected to an opening end of the casing in a sealed manner.

14. A battery module, comprising the battery cell of claim 13.

15. A battery pack, comprising the battery module of claim 14.
